# EUROPÄISCHE PATENTSCHRIFT

(11) **EP 1 375 679 B1**
(45) Veröffentlichungstag und Bekanntmachung des Hinweises auf die Patenterteilung: **25.04.2012**
(21) Anmeldenummer: 03450141.1
(22) Anmeldetag: 05.06.2003
(51) Int. Cl.: F27B 1/16, C21C 5/56, F27B 1/20

(54) **Schachtofen zum einschmelzen von Schrott**
Shaft furnace for smelting of scrap
Four à cuve pour la fusion de ferrailles

(30) Priorität: 28.06.2002 AT 9732002
(43) Veröffentlichungstag der Anmeldung: 02.01.2004
(73) Patentinhaber: Winkler, Manfred, 4501 Neuhofen (AT)
(72) Erfinder: Winkler, Manfred, 4501 Neuhofen (AT)
(74) Vertreter: Hübscher, Helmut

(56) Entgegenhaltungen:
- EP-A- 0 548 041
- EP-A- 0 784 193
- DE-B1- 1 583 867
- US-A- 3 129 930

## Beschreibung

Die Erfindung bezieht sich auf einen Schachtofen zum Einschmelzen von Schrott mit einem von oben beschickbaren, eine Schrottsäule aufnehmenden Schacht, der einen bodenseitigen Schmelzraum mit über den Schachtumfang verteilten, die Umfangswand des Schachtes durchsetzenden Brennern und mit einem Abstich im Bodenbereich bildet.

Zum Einschmelzen von Schrott ist es bekannt (DE 2 504 889 C2, DE 4 306 207 A1, EP 0 470 066 B1, EP 0 470 067 B1), Schachtöfen einzusetzen, die im Bodenbereich eine Schmelzkammer mit über den Schachtumfang verteilten Brennern aufweisen, die die Umfangswand durchsetzen. Im Schacht, der von oben mit Schrott, Koks und Zuschlagstoffen beschickt wird, ergibt sich eine auf einem Koksbett im Bereich des Schmelzraumes abgestützte Schrottsäule, die über die Brenner von unten aufgeschmolzen wird und im Ausmaß der Aufschmelzung absinkt, wobei die Schmelze und die sich bildende Schlakke durch das Koksbett fließt und über einen bodenseitigen Abstich zur Weiterbehandlung abgezogen werden. Durch die aus dem Schmelzraum aufsteigenden Rauchgase wird die Schrottsäule im Gegenstrom erwärmt, wobei durch Zufuhr von Sekundärluft oberhalb des Schmelzraumes für eine entsprechende Nachverbrennung gesorgt wird. Diese Nachverbrennung ist insbesondere im Zusammenhang mit Schrott von Bedeutung, der organische Stoffe enthält wie dies beispielsweise beim Einschmelzen von Schrott aus Kraftfahrzeugen der Fall ist. Durch eine entsprechende Nachverbrennung können nämlich die organischen Schrottbestandteile vorteilhaft als Energieträger für die Schrottvorwärmung genützt und vom metallischen Anteil getrennt werden. Die Abgase aus der Nachverbrennung werden im oberen Schachtbereich über ein Saugzuggebläse aus dem Schacht abgezogen.

EP0784193 definiert ein Schachtofen zum Einschmelzen von Schrott mit einem von oben beschickbaren, eine Schrottsäule aufnehmenden Schacht (23) und mit einen bodenseitigen Schmelzraum (22), welches gegenüber dem nach oben anschließenden, die Schrottsäule aufnehmenden Schachtabschnitt (23) erweitert ist und wobei des Übergangsabschnittes (7) zwischen dem erweiterten Schmelzraum (6) und dem anschließenden Schachtabschnitt ein Einschnurrung (24 -nicht fakultativ S. 6, z. 39-43) gebildet ist und wobei Brenner angeordnet sind. D1 ist der nächstliegender Stand der Technik zu Anspruch 1.

Obwohl sich der lichte Schachtquerschnitt gleichmäßig von oben nach unten erweitert, um ein unbehindertes Absinken der Schrottsäule zu ermöglichen, kommt es insbesondere beim Einsatz von Schrottpaketen, wie sie beim Verschrotten von Kraftfahrzeugen anfallen, zu Brückenbildungen innerhalb der Schrottsäule mit der Wirkung, daß im Bereich der Brenner Hohlräume ausgeschmolzen werden, weil die Schrottsäule aufgrund der Brückenbildung nicht im Abschmelzausmaß absinkt. Der mit der fortschreitenden Aufschmelzung verbundene Einsturz dieser Hohlräume bringt nicht nur die Gefahr einer mechanischen Beschädigung der Brenner durch abstürzende Schrotteile mit sich, sondern bedingt auch Unregelmäßigkeiten hinsichtlich des Abschmelzvorganges, was sich beispielsweise auf den Temperaturverlauf der Schmelze nachteilig auswirken kann.

Der Erfindung liegt somit die Aufgabe zugrunde, einen Schachtofen zum Einschmelzen von Schrott der eingangs geschilderten Art so auszugestalten, daß nicht nur eine Gefährdung der Brenner vermieden, sondern auch ein vorteilhaftes Abschmelzen der Schrottsäule sichergestellt werden kann.

Die Erfindung löst die gestellte Aufgabe dadurch, daß der Schmelzraum gegenüber dem nach oben anschließenden, die Schrottsäule aufnehmenden Schachtabschnitt erweitert ist und daß die im Bereich eines geneigten Übergangsabschnittes der Umfangswand des Schachtes zwischen dem erweiterten Schmelzraum und dem anschließenden Schachtabschnitt angeordneten Brenner gegenüber dem Schacht radial und axial verstellbar gelagert sind.

Der durch den erweiterten Schmelzraum bedingte, dachartige Übergangsabschnitt der Umfangswand des Schachtes zwischen dem Schmelzraum und dem die Schrottsäule aufnehmenden Schachtabschnitt bringt eine wirksame Abschirmung der im Bereich dieses geneigten Übergangsabschnittes angeordneten Brenner vor herabstürzenden Schrotteilen mit sich. Da die Brenner außerdem im wesentlichen außerhalb des durch die Schrottsäule gegebenen Auflastbereiches vorgesehen sind, kann eine Beschädigungsgefahr der Brenner weitgehend ausgeschlossen werden. Damit sind die wesentlichen Voraussetzungen erfüllt, um die Brenner entsprechend den jeweiligen Abschmelzbedingungen gegenüber der Schrottsäule ausrichten zu können. Erst mit einer solchen Ausrichtung der einzelnen Brenner können Unregelmäßigkeiten beispielsweise hinsichtlich der Schrottverteilung innerhalb der Schrottsäule ausgeglichen und gleichmäßige Abschmelzbedingungen eingehalten werden. Diese Ausrichtung der Brenner muß sowohl eine radiale als auch eine axiale Brennerverstellung bezüglich der Schachtachse umfassen, um die Heizbereiche entsprechend den jeweils auftretenden Verhältnissen einstellen zu können. Während mit einer Brennerverlagerung in Richtung der Schachtachse beispielsweise verhindert werden kann, daß sich größere Hohlräume im Bereich der Brenner ausbilden oder die Temperatur der Schmelze unter einen vorgegebenen Wert absinkt, kann durch eine radiale Verlagerung der Brenner die Brennermündung von anliegenden Schrotteilen freigestellt werden, um eine ordnungsgemäße Flammenausbildung zu gewährleisten.

Damit sowohl die radiale als auch die axiale Verstellung der Brenner gegenüber der Schachtachse in konstruktiv einfacher Weise gelöst wird, können die Brenner in radial zum Schacht ausgerichteten Verschiebeführungen verstellbar gelagert werden, die um quer zur Verschieberichtung und quer zur Schachtachse verlaufende Achsen schwenkbar gehalten sind. Über die Schwenkhalterung der Verschiebeführungen ergibt sich somit eine Einstellung der Brenner in Richtung der Schachtachse, wobei der Heizbereich der Brenner je nach Bedarf nach oben oder unten verlagert wird. Die Verstellung innerhalb der Verschiebeführung erlaubt die bezüglich der Schachtachse radiale Einstellung der Brenner. Die Schwenkhalterungen für die Verschiebeführungen können in unterschiedlicher Weise konstruktiv gestaltet werden. Besonders günstige Konstruktionsverhältnisse ergeben sich allerdings, wenn die Verschiebeführungen je an zwei Stellzylindern angelenkt sind, wobei die parallelen Anlenkachsen quer zur Verschieberichtung und quer zur Schachtachse verlaufen, weil in diesem Fall nicht nur ein Verschwenken der Verschiebeführung um eine Schwenkachse, sondern auch eine Verlagerung der Schwenkachse möglich wird.

Insbesondere aufgrund der Höhenverstellung der Brenner kann durch die erfindungsgemäßen Maßnahmen die Anzahl der Brenner im Vergleich zu feststehenden Brennern verringert werden, so daß unter Umständen mit einem Brennerkranz das Auslangen gefunden werden kann, wo sonst zwei Brennerkränze übereinander vorgesehen werden müssen. Eine Verringerung der Brenneranzahl bringt allerdings bei einem Ausfall von Brennern die Gefahr mit sich, daß die Schmelze erstarrt und nicht mehr über den Abstich abgezogen werden kann. Um einer solchen Gefahr begegnen zu können, können unterhalb der verstellbaren Brenner in der Umfangswand des Schachtes Zusatzbrenner vorgesehen werden, die gegen den Zulaufbereich des Abstiches gerichtet sind und beim Absinken der Temperatur der Schmelze unter einen vorgegebenen Grenzwert gezündet werden, damit die Schmelze nicht einfriert.

Im Bereich der Durchtritte für die verstellbaren Brenner durch die Umfangswand des Schachtes ergeben sich Toträume, in denen sich brennbares Gas ansammeln kann. Um eine Gefährdung durch eine Entzündung solcher Gasansammlungen zu vermeiden und einen gasdichten Abschluß der Durchtritte zu erreichen, ohne die Verstellbewegungen der Brenner zu gefährden, können die Durchtritte für die verstellbaren Brenner in der Umfangswand des Schachtes durch Faltenbälge abgedichtet werden, wobei die Faltenbälge bzw. die Durchtritte mit einem Inertgasanschluß versehen sind, um die sich im Bereich der Durchtritte ergebenden Toträume mit Inertgas spülen zu können. Bei einer solchen Inertgasspülung kann auch die damit verbundene Kühlwirkung vorteilhaft für die Faltenbälge und die Brenner genützt werden.

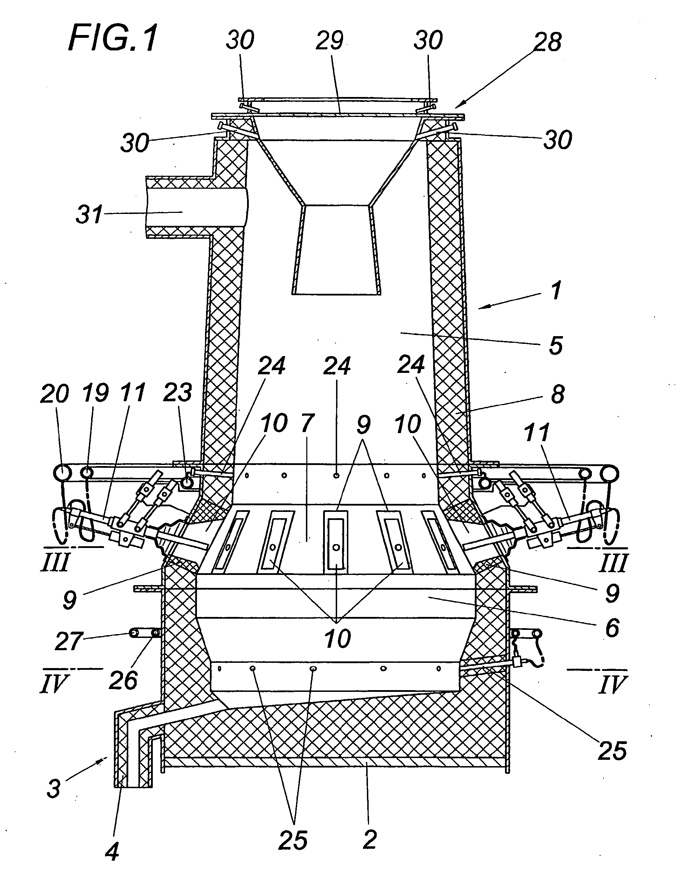

In der Zeichnung ist der Erfindungsgegenstand beispielsweise dargestellt. Es zeigen
- Fig. 1: einen erfindungsgemäßen Schachtofen zum Einschmelzen von Schrott in einem schematischen Axialschnitt,
- Fig. 2: den Schachtofen ausschnittsweise in einem Schnitt durch eine Brennerdurchführung durch die Umfangswand des Schachtes in einem größeren Maßstab,
- Fig. 3: einen Schnitt nach der Linie III-III der Fig. 1 und
- Fig. 4: einen Schnitt nach der Linie IV-IV der Fig. 1.

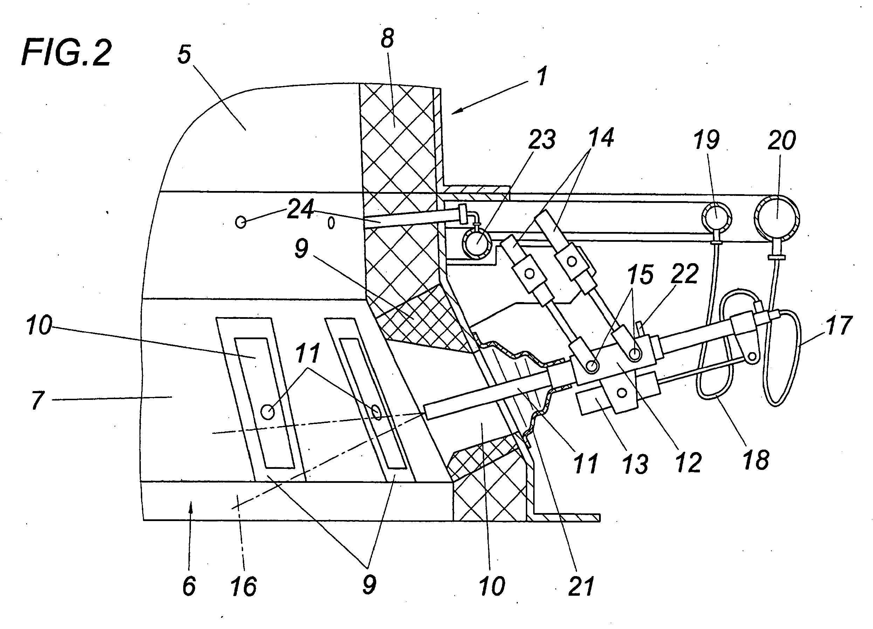

Der Schacht 1 des dargestellten Schachtofens weist einen Boden 2 mit einem einen Abstich 3 bildenden Absticherker 4 auf. Im Bodenbereich bildet der Schacht 1 einen gegenüber dem weiterführenden Schachtabschnitt 5 erweiterten Schmelzraum 6, zwischen dem und dem Schachtabschnitt 5 ein geneigter Übergangsabschnitt 7 der Umfangswand 8 des Schachtes 1 ausgebildet ist. In diesem Übergangsabschnitt 7 der Umfangswand 8 sind über den Umfang verteilt Formsteine 9 mit Durchtritten 10 für Brenner 11 eingesetzt, wie dies insbesondere der Fig. 2 entnommen werden kann. Diese Brenner 11 sind in einer Verschiebeführung 12 gegenüber der Schachtachse radial verschiebbar gelagert und können mit Hilfe eines Stelltriebes 13 vor- und zurückgestellt werden. Die Verschiebeführung 12 ist an zwei Stellzylindern 14 angelenkt, deren parallele Anlenkachsen 15 quer zur Verschieberichtung der Verschiebeführung 12 und quer zur Schachtachse verlaufen. Mit Hilfe der Stellzylinder 14 können somit die Brenner 11 über die Verschiebeführungen 12 in Richtung der Schaftachse durch ein Verschwenken verlagert werden, um den strichpunktiert angedeuteten Heizbereich 16 der Höhe nach zu verlagern.

Die Brenner 11 sind jeweils über eine Schlauchleitung 17 und 18 einerseits an eine Ringleitung 19 für Brennstoff, beispielsweise ein Brenngas, und anderseits an eine Ringleitung 20 für Luft oder Sauerstoff angeschlossen. Die Abdichtung der Brennerdurchtritte 10 in den Formsteinen 9 wird durch hitzebeständige Faltenbälge 21 erreicht. Die Toträume im Bereich der Durchtritte 10 und der Faltenbälge 21 können mit Inertgas, beispielsweise Stickstoff, gespült werden, um Ansammlungen brennbarer Gase in diesen Bereich zu verhindern. Zu diesem Zweck kann die an den jeweiligen Faltenbalg 21 angeschlossene Verschiebeführung mit einem entsprechenden Inertgasanschluß 22 versehen werden, der innerhalb des Faltenbalges 21 mündet.

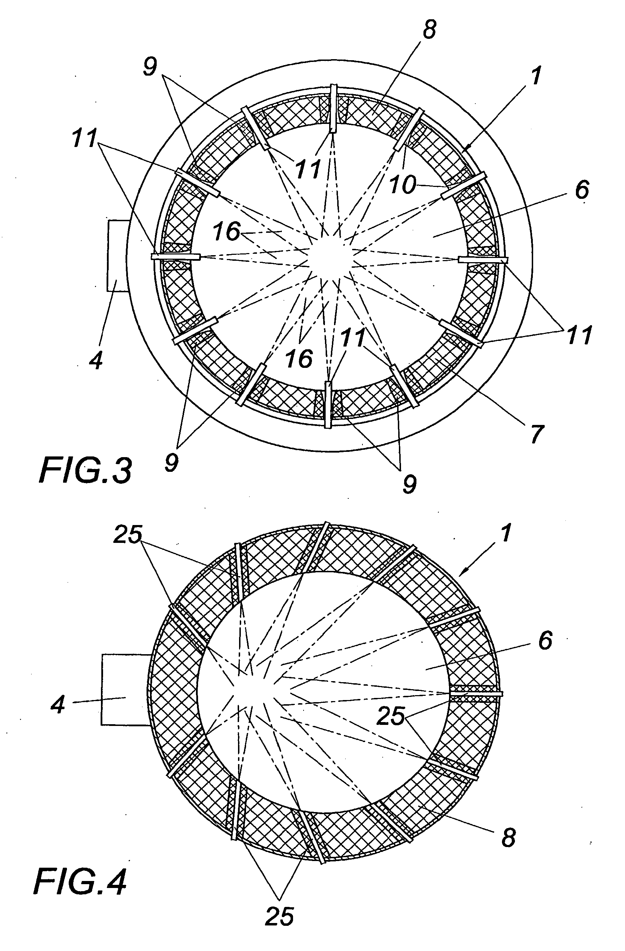

Oberhalb der Brenner 11 münden in den Schachtabschnitt an eine ringförmige Luftleitung 23 angeschlossene Düsen 24 für die Sekundärluftzufuhr. Unterhalb der Brenner 11 sind Zusatzbrenner 25 in einem den Schacht 1 umschließenden Kranz vorgesehen, die wiederum über Ringleitungen 26 und 27 mit Brenngas und Sauerstoff bzw. Luft versorgt werden. Im Gegensatz zu den Brennern 11 durchsetzen die Brenner 25 jedoch die Umfangswand 8 des Schachtes 1 ohne Verstellmöglichkeit. Wie der Fig. 3 entnommen werden kann, sind die verstellbaren Brenner 11 auf die Schachtachse hin ausgerichtet. Die vom Schachtabschnitt 5 aufgenommene Schrottsäule wird daher von allen Seiten gleichmäßig erwärmt. Die Zusatzbrenner 25 sind jedoch gemäß der Fig. 4 gegen den Zulaufbereich des Abstiches 3 hin exzentrisch ausgerichtet, so daß über die Zusatzbrenner 25 vor allem dieser Zulaufbereich erwärmt werden kann, um in Notfällen ein Einfrieren der Schmelze zu verhindern.

Der einzuschmelzende Schrott wird mit Koks und Zuschlagstoffen dem Schachtofen mit Hilfe eines Chargierkorbes aufgegeben, der oben auf den Schachtkopf 28 aufgesetzt wird, der zur Beschickung einen Schieber 29 aufweist. Um beim Chargieren des Schachtofens den Eintritt von Luftsauerstoff in den Schachtabschnitt 5 zu vermeiden, kann der Ofenkopf 28 mit Stickstoff gespült werden, der über Düsen 30 bei geöffnetem Schieber 29 eingeblasen wird.

Die sich im Schachtabschnitt 5 aufbauende Schrottsäule, stützt sich auf einem Koksbett im Schmelzraum 6 ab, und wird über die Flammen der Brenner 11 kontinuierlich aufgeschmolzen, so daß die Schmelze mit der sich bildenden Schlacke durch das Koksbett zum Abstich 3 ausfließt, wobei in bekannter Weise eine Aufkohlung des Stahls erfolgt. Die entgegen der Absinkbewegung der Schrottsäule aufsteigenden Rauchgase werden einer Nachverbrennung zugeführt, für die der notwendige Sauerstoff über die Düsen 24 für die Sekundärluft zugeführt wird. Im Schachtabschnitt 5 wird somit die Schrottsäule vorgewärmt, wobei organische Schrottanteile vorteilhaft als Energieträger für die Vorwärmung der Schrottsäule ausgenützt werden. Die Abgase werden über ein nicht dargestelltes Saugzuggebläse über eine Abgasleitung 31 aus dem Schacht 1 abgezogen.

Treten im Einflußbereich der Brenner 11 Unregelmäßigkeiten auf, beispielsweise dadurch, daß aufgrund von Brückenbildungen aus der Schrottsäule Hohlräume ausgeschmolzen werden, so können die Brenner 11 über die Stellzylinder 14 entsprechend den auftretenden Unregelmäßigkeiten so eingestellt werden, daß die örtliche Heizleistung im Bereich der Schrottsäule zum Ausgleich der Unregelmäßigkeiten verändert wird. Die Schrottsäule sinkt daher ohne Ausbildung größerer Hohlräume entsprechend dem Schmelzvorgang nach, wobei eine Gefährdung der Brenner 11 durch herabstürzende Schrotteile weitgehend ausgeschlossen werden kann, weil die Brenner durch den geneigten Übergangsabschnitt 7 der Umfangswand 8 dachartig vor der Auflast der Schrottsäule geschützt werden.

Die Erfindung ist selbstverständlich nicht auf das dargestellte Ausführungsbeispiel beschränkt, weil es nicht um die Ausbildung oder Lagerung der verstellbaren Brenner 11 geht, sondern um die Verstellbarkeit der Brenner 11 an sich, so daß hiefür unterschiedliche Konstruktionen zum Einsatz kommen können. Gleiches gilt für den Aufbau des Schachtofens, der lediglich einen gegenüber dem anschließenden Schaftabschnitt 5 erweiterten Schmelzraum 6 aufweisen muß, um die verstellbaren Brenner 11 vor mechanischen Belastungen durch die Schrottsäule zu schützen. Der Schacht 1 muß zwar von oben beschickt werden, doch bedeutet dies nicht, daß der einzuschmelzende Schrott nicht auch im oberen Schachtbereich seitlich in den Schacht eingebracht werden kann.

## Patentansprüche

1. Schachtofen zum Einschmelzen von Schrott mit einem von oben beschickbaren, eine Schrottsäule aufnehmenden Schacht, der einen bodenseitigen Schmelzraum mit über den Schachtumfang verteilten, die Umfangswand des Schachtes durchsetzenden Brennern und mit einem Abstich im Bodenbereich bildet, **dadurch gekennzeichnet, daß** der Schmelzraum (6) gegenüber dem nach oben anschließenden, die Schrottsäule aufnehmenden Schachtabschnitt (5) erweitert ist und daß die im Bereich eines geneigten Übet-gangsabschnittes (7) der Umfangswand (8) des Schachtes (1) zwischen dem erweiterten Schmelzraum (6) und dem anschließenden Schachtabschnitt (5) angeordneten Brenner (11) gegenüber dem Schacht (1) radial und axial verstellbar gelagert sind.

2. Schachtofen nach Anspruch 1, **dadurch gekennzeichnet, daß** die Brenner (11) in radial zum Schacht (1) ausgerichteten Verschiebeführungen (12) verstellbar lagern, die um quer zur Verschieberichtung und quer zur Schachtachse verlaufende Achsen schwenkbar gehalten sind.

3. Schachtofen nach Anspruch 2, **dadurch gekennzeichnet, daß** die Verschiebeführungen (12) je an zwei Stellzylindern (14) angelenkt sind, wobei die parallelen Anlenkachsen (15) quer zur Verschieberichtung und quer zur Schachtachse verlaufen.

4. Schachtofen nach einem der Ansprüche 1 bis 3, **dadurch gekennzeichnet, daß** unterhalb der verstellbaren. Brenner (11) in der Umfangswand (8) des Schachtes (1) auf gegen den Zulaufbereich des Abstiches (3) gerichtete Zusatzbrenner (25) vorgesehen sind.

5. Schachtofen nach einem der Ansprüche 1 bis 4, **dadurch gekennzeichnet, daß** die Durchtritte (10) für die verstellbaren Brenner (11) in der Umfangswand (8) des Schachtes (1) durch Faltenbälge (21) abgedichtet sind und daß die Faltenbälge (21) bzw. die Durchtritte (10) mit einem Inertgasanschluß (22) versehen sind.

## Claims

1. Shaft furnace for smelting scrap having a shaft which can be fed from above, receives a column of scrap and forms a base-side smelting zone having burners, which are distributed over the shaft periphery and pass through the peripheral wall of the shaft, and having a tap in the base region, **characterised in that** the smelting zone (6) is widened with respect to the upwardly adjoining shaft section (5) which receives the column of scrap, and that the burners (11) which are disposed in the region of an inclined transition section (7) of the peripheral wall (8) of the shaft (1) between the widened smelting zone (6) and the adjoining shaft section (5) are mounted in such a manner as to be radially and axially adjustable with respect to the shaft (1).

2. Shaft furnace as claimed in claim 1, **characterised in that** the burners (11) are supported so as to be adjustable in displacement guides (12) which are aligned radially with respect to the shaft (1) and are held so as to be pivotable about axes which extend transversely with respect to the displacement direction and transversely with respect to the shaft axis.

3. Shaft furnace as claimed in claim 2, **characterised in that** the displacement guides (12) are articulated in each case to two adjustment cylinders (14), wherein the parallel articulation spindles (15) extend transversely with respect to the displacement direction and transversely with respect to the shaft axis.

4. Shaft furnace as claimed in any one of claim 1 to 3, **characterised in that** auxiliary burners (25) which are directed towards the inlet region of the tap (3) are provided underneath the adjustable burners (11) in the peripheral wall (8) of the shaft (1).

5. Shaft furnace as claimed in any one of claims 1 to 4, **characterised in that** the passages (10) for the adjustable burners (11) are stated in the peripheral wall (8) of the shaft (1) by means of bellows (21) and that the bellows (21) or the passages (10) are provided with an inert gas confection (22).

## Revendications

1. Four à cuve pour la fusion de ferrailles avec une cuve admettant une colonne de ferrailles, pouvant être alimentée par le haut qui forme une chambre de fusion côté sol avec des brûleurs distribués sur la périphérie de la cuve, traversant la paroi périphérique de la cuve et avec une percée dans la zone du sol, **caractérisé en ce que** la chambre de fusion (6) est élargie par rapport à la section de cuve (5) attachée vers le haut et admettant la colonne de ferrailles et **en ce que** les brûleurs (11) placés dans la zone d'une section inclinée de transition (7) de la paroi périphérique (8) de la cuve (1), entre la chambre de fusion (6) élargie et la section de cuve (5) suivante, sont disposés de façon réglable, radialement et axialement, par rapport à la cuve (1).

2. Four à cuve selon la revendication 1, **caractérisé en ce que** les brûleurs (11) sont placés de façon réglable dans des guides de translation (12) dirigés radialement par rapport à la cuve (1) qui sont tenus orientables autour d'axes transversaux à l'axe de la cuve et transversaux à la direction de déplacement.

3. Four à cuve selon la revendication 2, **caractérisé en ce que** les guides de translation (12) sont articulés respectivement au niveau de deux vérins de manoeuvre (14), les axes d'articulation (15) parallèles étant transversaux à la direction de déplacement et transversaux à l'axe de la cuve.

4. Four à cuve selon l'une des revendications 1 à 3, **caractérisé en ce qu'**en dessous des brûleurs (11) réglables, des brûleurs supplémentaires (25) situés à l'opposé de la zone d'amenée de la percée (3) sont prévus dans la paroi périphérique (8) de la cuve (1).

5. Four à cuve selon l'une des revendications 1 à 4, **caractérisé en ce que** les passages (10) pour les brûleurs (11) réglables sont rendus étanches par des soufflets (21) dans la paroi périphérique (8) de la cuve (1) et **en ce que** les soufflets (21) ou les passages (10) sont munis d'un raccord gaz inerte (22).
